(19) **Europäisches Patentamt / European Patent Office / Office européen des brevets**

(11) **EP 2 412 432 B1**

(12) # EUROPEAN PATENT SPECIFICATION

(45) Date of publication and mention of the grant of the patent:
**07.05.2014 Bulletin 2014/19**

(51) Int Cl.:
**B01J 20/20** *(2006.01)*    **B01J 20/28** *(2006.01)*
**A24D 3/16** *(2006.01)*

(21) Application number: **11170171.0**

(22) Date of filing: **16.06.2011**

(54) **Nicotine Adsorbent, Quinoline Adsorbent, Benzopyrene Adsorbent, Toluidine Adsorbent, and Carcinogen Adsorbent**

Nikotinadsorptionsmittel, Chinolinadsorptionsmittel, Benzopyrenadsorptionsmittel, Toluidinadsorptionsmittel und Karzinogenadsorptionsmittel

Adsorbant de nicotine, adsorbant de quinoléine, adsorbant de benzopyrène, adsorbant de toluidine et adsorbant de carcinogène

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2010 JP 2010170713**
**25.01.2011 JP 2011012875**

(43) Date of publication of application:
**01.02.2012 Bulletin 2012/05**

(73) Proprietor: **Sony Corporation**
**Tokyo 108-0075 (JP)**

(72) Inventors:
 • **Tabata, Seiichiro**
   **Minato-ku, Tokyo 108-0075 (JP)**
 • **Iida, Hironori**
   **Minato-ku, Tokyo 108-0075 (JP)**
 • **Minatoya, Machiko**
   **Minato-ku, Tokyo 108-0075 (JP)**
 • **Yamada, Shinichiro**
   **Minato-ku, Tokyo 108-0075 (JP)**
 • **Yamanoi, Shun**
   **Minato-ku, Tokyo 108-0075 (JP)**

(74) Representative: **Ealey, Douglas Ralph**
**D Young & Co LLP**
**120 Holborn**
**London EC1N 2DY (GB)**

(56) References cited:
**WO-A1-03/059096     WO-A1-2007/117115**
**WO-A1-2010/035823    CA-A1- 2 330 782**
**US-A- 4 195 649**

• **SEIICHIRO TABATA ET AL: "Hierarchical porous carbon from cell assemblies of rice husk for in vivo applications", MEDCHEMCOMM, vol. 1, no. 2, 5 May 2010 (2010-05-05), pages 136-138, XP55010549, ISSN: 2040-2503, DOI: 10.1039/c0md00011f & Seiichiro Tabata ET AL: "Supporting Information Hierarchical porous carbon from cell assemblies of rice husk for in vivo applications", MedChemComm, 5 May 2010 (2010-05-05), pages 1-12, XP55010553, Retrieved from the Internet: URL:http://www.rsc.org/ suppdata/md/c0/c0md 00011f/c0md00011f.pdf [retrieved on 2011-10-26]**

EP 2 412 432 B1

**Description**

The present disclosure relates to a nicotine adsorbent, a quinoline adsorbent, a benzopyrene adsorbent, a toluidine adsorbent, and a carcinogen adsorbent made from a porous carbon material.

Activated carbon made from materials such as nutshells and petroleum pich have been widely used as an adsorbent for tar components included in cigarettes (for example, see JP-A-61-054236). Unused parts of plats such as vegetables and cereals are mostly disposed of, and there are strong demands for effective utilization of such unused parts of materials for the purpose of preserving and improving global environment. One example of effective utilization of unused materials is a carbonizing process.

WO 2007/117115 discloses a cigarette filter using bamboo activated carbon, which has an exceleltn effect in removing harmful components as compared to conventionally used oak charcoal or bamboo charcoal. The functional cigarette filter according to the invention can give aesthetic comfort at the time of smoking due to the flavor of bamboo. More specifically, the invention relates to a cigarette filter using bamboo activated carbon, which comprises fibrous material consisting of cellulose acetate and at least one filtering material charged with bamboo activated carbon. The cigarette filter according to the present invention has excellent ability to adsorb harmful substances and at least three-folds of ability to adsorb iodine, as compared to a cigarette filter using conventionally used charcoal or coconut shell activated carbon. The bamboo activated carbon may have a total pore volume of 0.62 $cm^3$/g and a specific surface area of 600-3000 $m^2$/g.

CA 2330782 discloses an effective filtering device for removing hazardous chemicals in tobacco smoke that comprises of a small cylindrical shaped pell et (or disc), made from a mixture of microporous coconut shell carbon and naturally occurring clay material through a binding and compaction technique. The device is capable of substantially removing harmful constituents of mainstream tobacco smoke including carbon monoxide, tar, nicotine and a vast range of volatile and semi-volatile hydrocarbons, phenols and polycyclic aromatic hydrocarbons (PAHs) rendering the cigarette smoke safer. The microporous carbon may have a surface area in the range 1000-1500 $m^2$/g and a micropore voulume in the range 0.45-0.65 mL/g.

US 4,195,649 discloses a tobacco smoke filter capable of selectively removing irritating materials and unpleasant bitter components from tobacco smoke and containing as a filter element nitrogen-containing activated carbon fibers produced by oxidizing acrylonitrile polymer fibers and then activating the oxidized fibers. The nitrogen-containing activated carbon fibers may have a specific surface area of 100-1500 $m^2$/g and a pore volume of 0.1 to 1 mL/g.

WO 03/059096 discloses a smoking article such as a cigarette comprises a tobacco rod and a filter component having a cavity filled with spherical beaded carbon. As mainstream tobacco smoke is drawn through the filter component, targeted gas phase smoke constituents are removed as the smoke passes through the carbon. During the filter manufacturing process, the spherical beaded carbon flows like a liquid and substantially completely fills the cavity. Point-to-point contact between the spherical beads together with substantially complete filling of the cavity produces minimal channeling of ambulatory gas phase as well as maximum contact between the gas phase and the carbon surface of the spherical beads during smoking. The beaded carbon material may have a specific surface area in the range of 1100 to 1300 $m^2$/g. The beaded carbon material may have a total pore volume of not greater than 0.6 $cm^3$/g.

WO 2010/035823 discloses a porous carbon material composite formed of a porous carbon material and a functional material and equipped with high functionality. A porous carbon material composite is formed of (A) a porous carbon material obtainable from a plant-derived material having a silicon (Si) content of 5 wt% or higher as a raw material, said porous carbon material having a silicon (Si) content of 1 wt% or lower, and (B) a functional material adhered on the porous carbon material, and has a specific surface area of 10 $m^2$/g or greater as determined by the nitrogen BET method and a pore volume of 0.1 $cm^3$/g or greater as determined by the BJH method and MP method. The porous carbon material is disclosed as being included I a photocatalyst composite material.

Med. Chem. Commun., 2010, vol. 1, pages 136-138 discloses a hierarchical porous carbon material comprising mirco- meso- and macropores that was developed by an environmentally friendly process using unique structural cell assemblies of rice husk. A porous carbon material is described with a specific surface area of 1340 $m^2$/g and a pore volume of 1.2 $cm^3$/g.

In general, activated carbon has only microscopic pores of 2 nm or less, and it is difficult to absorb tar components included in cigarettes effectively using such a material. Further, no technique is available yet for carbonizing plant-based materials sufficiently, and further improvements in functionality are desired for carbon materials in production.

Thus, it is therefore desirable to provide an adsorbent made of a porous carbon material which efficiently absorbs tar components and carcinogens included in cigarettes.

Various respective aspects and features of the invention are defined in the appended claims. Combinations of features from the dependent claims may be combined with features of the independent claims as appropriate and not merely as explicitly set out in the claims. An embodiment of the present disclosure is directed to a cigarette filter comprising a carcinogen adsorbent comprising a porous carbon material having a specific surface area of 10 $m^2$/g or more according to the nitrogen BET method and a pore volume of 0.2 $cm^3$/g or more according to the BJH method and a pore diameter distribution obtained according to the non localized density functional theory which includes at least one peak within the range from 3 nm to 20 nm and wherein the ratio of the volume of pores having a pore diameter within the range from 3 nm to 20 nm to the total pore volume of all pores is 0.2 or more.

Another embodiment of the present disclosure is directed to the use of the cigarette filter to adsorb nicotine.

Another embodiment of the present disclosure is directed to the use of the cigarette filter to adsorb quinoline.

Still another embodiment of the present disclosure is directed to A the use of the cigarette filter to adsorb benzopyrene.

Yet another embodiment of the present disclosure is directed to the use of the cigarette filter to adsorb toluidine.

Another embodiment of the present disclosure is directed to the use of the cigarette filter to adsorb a carcinogen.

The described porous carbon material has a specific surface area of 10 $m^2$/g or more measured using the nitrogen BET method and a pore volume of 0.2 $cm^3$/g or more measured according to the BJH method. The pores have sizes in the mezzo domain (2 to 50 nm) which are difficult to achieve in activated carbon in the related art. According to the embodiments of the present disclosure, such pore sizes make it possible to achieve excellent adsorbing characteristics including the capability of selectively and effectively adsorbing tar components and carcinogens included in cigarettes such as nicotine, quinoline, benzopyrene, and toluidine and the suppression of adsorption of aromatic components of cigarettes.

Embodiments of the invention will now be described with reference to the accompanying drawings, throughout which like parts are referred to by like references, and in which:

Fig. 1 shows a graph showing results of measurement of pore diameter distributions obtained according to the non localized density functional theory in an embodiment of the present disclosure and a comparative example;

Fig. 2 shows graphs showing the volumes of nicotine, quinoline, benzopyrene, and toluidine adsorbed by adsorbents in the embodiment and the comparative example; and

Fig. 3 shows graphs showing results of GC-MS measurement of effects of the adsorbents in the embodiment and the comparative example on nicotine and benzopyrene.

Embodiments of the present disclosure will now be described with reference to the drawings. The present disclosure is not limited to the embodiments, and various numerical values and materials mentioned in the description of the embodiments are merely examples. The following items will be described in the order listed.

1. General Description of Nicotine Adsorbent, Quinoline Adsorbent, Benzopyrene Adsorbent, Toluidine Adsorbent, and Carcinogen Adsorbent According to Embodiment of the Present Disclosure

2. Embodiment 1 of Nicotine Adsorbent, Quinoline Adsorbent, Benzopyrene Adsorbent, Toluidine Adsorbent, and Carcinogen Adsorbent According to Embodiment of the Present Disclosure

[General Description of Nicotine Adsorbent, Quinoline Adsorbent, Benzopyrene Adsorbent, Toluidine Adsorbent, and Carcinogen Adsorbent According to Embodiment of the Present Disclosure]

For example, a nicotine adsorbent, a quinoline adsorbent, a benzopyrene adsorbent, a toluidine adsorbent, and a carcinogen adsorbent according to embodiments of the present disclosure (those materials may hereinafter be referred to as "adsorbent(s) according to the present disclosure") may be used a filter. Specifically, an adsorbent according to the present disclosure may be deposited on a fibrous material forming a part of a cigarette filter. Alternatively, an adsorbent according to the present disclosure may be mixed in such a fibrous material. Such an adsorbent may be used in various exemplary forms, i.e., in the form of a sheet, in a desired shape formed using a binder or the like, or in the form of powder.

When a porous carbon material constituting an adsorbent according to an embodiment of the present disclosure (hereinafter, such a porous carbon material may be referred to as "a porous carbon material according to the present disclosure") is a plant-based material including silicon (Si), the porous carbon material specifically includes 5 wt % or more silicon, although the present disclosure is not limited to such a silicon content. The silicon content of the material is desirably 5 wt % or less. The silicon content is preferably 3 wt % or less and, more preferably, 1 wt % or less.

For example, the porous carbon material according to the present disclosure can be obtained by carbonizing a plant-based material at a temperature in the range from 400°C to 1400°C and thereafter treating the material using an acid or alkali. The material obtained by carbonizing a plant-based material at a temperature in the range from 400°C to 1400°C according to the method of manufacturing the porous carbon material according to the present disclosure (hereinafter, the method may be simply referred to as "the porous carbon material manufacturing method") is referred to as "porous carbon material precursor" or "carbonic substance") before the material is treated using an acid or alkali.

The porous carbon material manufacturing method may include an activation step which follows the treatment using an acid or alkali. The treatment using an acid or alkali may be performed after the activating process. When the porous carbon material manufacturing method includes such a preferable step, a heating process (preliminary carbonizing process) may be performed on the plant-based material with oxygen eliminated from the atmosphere at a temperature (e.g., a temperature in the range from 400°C to 700°C) lower than the carbonizing temperature before the plant-based material is carbonized. Since the heating process extracts tar components from the material, it is possible to reduce the amount of tar components generated at the carbonizing step or to prevent the generation of tar components at the carbonizing process. For example, the oxygen can be eliminated by performing the process in an inert gas atmosphere such as a nitrogen gas or argon gas atmosphere or in a vacuum atmosphere. The elimination of oxygen can be also achieved by putting the plant-based material in a kind of baked state. According to the porous carbon material manufacturing method, the plant-based material may be immersed in alcohol (e.g., methyl alcohol, ethyl alcohol, or isopropyl alcohol) to reduce minerals and moisture included in the plant-based material or to prevent the generation of an offensive small during the carbonizing process, although the process depends on the type of the plant-based material. According to the porous carbon material manufacturing method, the preliminary carbonizing process may be thereafter performed. For example, materials for which the heating process in an inert gas preferably works include plants emitting a great amount of pyroligneous acid (tar or light oil component). Materials for which the pre-process using alcohol preferably works include, for example, marine algae rich in minerals of various types such as iodine.

According to the porous carbon material manufacturing method, a plant-based material is carbonized at a temperature in the range from 400°C to 1400°C. In general, the term "carbonizing" means the act of converting an organic substance (a plant-based substance when the substance is to be processed into the porous carbon material according to the present disclosure) into a carbonic substance through a thermal treatment (for example, see JIS M0104-1984). Carbonizing may be carried out in an atmosphere from which oxygen is eliminated. Specifically, the process may be carried out in a vacuum atmosphere, an inert gas atmosphere such as a nitrogen gas or argon gas atmosphere, or an atmosphere in which a plant-based material can be put in a kind of baked state. The temperature of such an atmosphere is increased to a carbonizing temperature at a rate of 1°C/min. or more. The rate is preferably 3°C/min. or more and, more preferably, 5°C/min. or more, although the embodiment is not limited to such rates. The upper limit of the carbonizing time may be 10 hours. A preferable upper limit is 7 hours, and a more preferable upper limit is 5 hours, although the embodiment is not limited to such values. The lower limit of the carbonizing time may be a period of time during which a plant-based material can be reliably carbonized. A plant-based material may be pulverized to a desired particle size or classified, as occasion demands. A plat-based material may be washed in advance. A porous carbon material precursor or porous carbon material obtained as thus described may be pulverized to a desired particle size or classified, as occasion demands. Alternatively, a porous carbon material which has received an activation process may be pulverized to a desired particle size or classified, as occasion demands. Further, a porous carbon material obtained through processes as thus described may finally be subjected to a sterilizing process. No limitation is placed on the type, configuration, and structure of a furnace to be used for carbonization, the furnace may be either continuous furnace or batch furnace.

According to the porous carbon material manufacturing method, as described above, the number of microscopic pores having a diameter less than 2 nm can be increased by performing an activation process on the material of interest. The activation process may be a process such as gas activation or chemical activation. Gas activation is a process of heating a porous carbon material in a gas atmosphere such as oxygen, steam, carbonic acid gas, or air serving as an activator at a temperature in the range from 700°C to 1400°C, preferably in the range from 700°C to 1000°C, and more preferably in the range from 800°C to 1000°C for several tens minutes or several hours to form fine structures in the material utilizing volatile components and carbon molecules included in the porous carbon material. More specifically, an appropriate heating temperature may be selected based on the type of the plant-based material processed and the type and concentration of the gas. Chemical activation is a process of activating a porous carbon material using a zinc chloride, iron chloride, calcium phosphate, calcium hydroxide, magnesium carbonate, potassium carbonate, or sulfuric acid, washing the material using a hydrochloric acid, adjusting the pH of the material using an alkaline solution, and drying the material.

The surface of the porous carbon material according to the present disclosure may be subjected to a chemical treatment or molecular modification. For example, the chemical treatment may be a treatment using a nitric acid to generate carboxyl groups on the surface. A treatment similar to activation using steam, oxygen, or alkali may be performed to generate various functional groups such as hydroxyl groups, carboxyl groups, ketone groups, and ester groups on the surface of the porous carbon material. Further, molecular modification can be carried out by causing a chemical reaction between the porous carbon material and a chemical species including hydroxyl groups, carboxyl groups, or amino groups or between the material and protein.

According to the porous carbon material manufacturing method, a silicon component in a carbonated plant-based material is removed by treating the material using an acid or alkali. The silicon component may be a silicon oxide such as silicon dioxide, silicon oxide, or salt of silicon oxide. A porous carbon material having a great specific surface area can be obtained by removing a silicon component from a carbonized plant-based material. Alternatively, a silicon component in a carbonized plant-based material may be removed using a dry etching process as occasion demands.

In the embodiment of the present disclosure, a porous carbon material is preferably made from a plant-based material including silicon (Si). When the plant-based material is converted into a porous carbon material precursor or a carbonic substance, the material is carbonized at a high temperature (e. g., a temperature in the range from 400°C to 1400°C) . As a result, the silicon included in the plant-based material becomes a silicon component (a silicon oxide) such as silicon dioxide ($SiO_2$), silicon oxide, or salt of silicon oxide instead of becoming silicon carbide (SiC). A silicon component (a silicon oxide) included in the plant-based material before carbonization undergoes no substantial change when the material is carbonized at the high temperature (e.g., a temperature in the range from 400°C to 1400°C) . Therefore, the silicon component (silicon oxide) such as silicon dioxide, silicon oxide, or salt of silicon oxide is removed by a treatment performed at a subsequent step using an acid or alkali (base). As a result, a material having a great specific surface area can be obtained using the nitrogen BET method. In addition, the preferable porous carbon material of the embodiment according to the present disclosure is an environment-compatible material, and the microscopic structures of the material are obtained by treating and removing a silicon component (a silicon oxide) included in the plant-based material from which the porous material is made using an acid or alkali. Therefore, biological regularity of the plant remains in the arrangement of pores of the material thus obtained.

As described above, the porous carbon material can be made from a plant-based material. The plant-based material may be a cereal such as rice, barley, wheat, rye, barnyard millet, and foxtail millet, straws, coffee beans, tea leaves (e.g., leaves of green tea and black tea), sugar canes (more specifically, squeezed sugar canes), corns (more specifically, cores of corns), fruit peels (e.g., peels of oranges, bananas, and the like), reeds, or stems of Wakame seaweed. The embodiment is not limited to such materials, and other materials that can be used include terrestrial vascular plants, pteridophytes, bryophytes, algae, and marine algae. Those materials may be used alone and, alternatively, plural types of such materials may be used in combination. There is no particular limitation on the shape or form in which a plant-based material is used. For example, chaff or straws may be used as they are, and such materials may alternatively be used after being dried. Further, materials of foods and beverages such as beer and liquors may be used after performing various processes such as fermentation, roasting, and extraction on the materials. In particular, it is desirable to use straws and chaff which have received processes such as threshing from the viewpoint of utilization of industrial wastes as resources. Such processed straws and chaff can be easily obtained in a great amount from, for example, agricultural cooperatives, food companies, and food processing companies.

The porous carbon material according to the present disclosure may include no-metallic elements such as magnesium (Mg), potassium (K), calcium (Ca), phosphorous (P), and sulfur (S) and metallic elements such as transition elements. For example, the material may have a magnesium (Mg) content in the range from 0.01 wt % to 3 wt % inclusive, a potassium (K) content in the range from 0.01 wt % to 3 wt % inclusive, a calcium (Ca) content in the range from 0.05 wt % to 3 wt % inclusive, a phosphorous (P) content in the range from 0.01 wt % to 3 wt % inclusive, and a sulfur (S) content in the range from 0.01 wt % to 3 wt % inclusive. While the contents of those elements depend on the application of the adsorbent according to the present disclosure of interest, it is preferable to keep the contents small to provide the material with a greater specific surface area. The porous carbon material may elements other than the elements listed above, and the above-listed ranges of contents of the elements may obviously changed depending on the application of the adsorbent according to the present disclosure of interest.

For example, the various elements mentioned in the present disclosure may be analyzed using an energy dispersive X-ray analyzer (e. g. , JED-2200F manufactured by JEOL Ltd.) according to energy-dispersive spectroscopy (ED5). Referring to measuring conditions, the analysis may be carried out at, for example, a scan voltage of 15 kV and an irradiation current of 10 $\mu$A.

The porous carbon material according to the present disclosure has many pores. The pores include "mesopores" having a diameter in the range from 2 nm to 50 nm and "micro pores" having a diameter smaller than 2 nm. Specifically, the majority of the pores in the material is pores having a diameter of 20 nm or less. In particular, pores having a diameter of 10 nm or less are dominant. The majority of the micro pores is pores having a diameter of about 1.9 nm, pores having a diameter of about 1.5 nm, and pores having a diameter in the range from about 0.8 nm to about 1 nm. Pores of a porous carbon material according to the present disclosure have a volume of 0.2 $cm^3$/g or more according to the BJH method. The volume is preferably 0.4 $cm^3$/g or more and more preferably 0.6 $cm^3$/g or more.

The porous carbon material according to the present disclosure preferably has a nitrogen BET specific surface area of 50 $m^2$/g or more (hereinafter such a value may be simply referred to as "a specific surface area"). The specific surface area is more specifically 100 $m^2$/g and still more preferably 400 $m^2$/g.

The nitrogen BET method is a method including the steps of measuring an adsorption isotherm by causing an adsorbent (a porous carbon material in this case) to adsorb and desorb nitrogen as admolecules and analyzing data obtained by the measurement based on a BET equation shown below as Expression (1). The specific surface area and the pore volume of the porous carbon material can be calculated using the method. Specifically, when the specific surface area of the porous carbon material is calculated according to the nitrogen BET method, the material is first made to adsorb and desorb nitrogen as admolecules, whereby an adsorption isotherm is obtained. $[p/\{V_a(p_0-p)\}]$ is calculated from the adsorption isotherm obtained as thus described based on Expression (1) or Expression (1') obtained by changing Expression (1), and $[p/\{V_a(p_0-p)\}]$ is plotted versus a relative pressure in equilibrium $(p/p_0)$. The plot is regarded as a straight line, and a slope s $(= [(C-1)/(C\cdot V_m)])$ and an intercept i $(= [1/(C\cdot V_m)])$ are calculated based on the least square method. Values $V_m$ and C are calculated from the slope s and the intercept i according to Expressions (2-1) and (2-2). Further, a specific surface area $a_{sBET}$ is calculated from the value $V_m$ according to Expression (3) (see pages 62 to 66 of Instruction Manual for BELSORP-mini and BELSORP analysis programs manufactured by BEL JAPAN, INC.). The nitrogen BET method is a method of measurement in compliance with JIS R 1626-1996 "Measuring Methods for the Specific Surface Area of Fine Ceramic Powders by Gas Adsorption Using the BET Method".

$$V_a = (V_m \cdot C \cdot p) / [ (p_0 - p) \{1 + (C-1)(p/p_0)\}] \qquad (1)$$

$$[p/\{V_a(p_0-p)\}] = \{(C-1)/(C\cdot V_m)\}(p/p_0) + [1/(C\cdot V_m)] \qquad (1')$$

$$V_m = 1/(s+i) \qquad (2-1)$$

$$C = (s/i)+1 \qquad (2-2)$$

$$a_{sBET} = (V_m \cdot L \cdot \sigma)/22414 \qquad (3)$$

In the expressions, $V_a$ represents the volume of nitrogen adsorbed; $V_m$ represents the volume of a monomolecular layer adsorbed; p represents a nitrogen pressure in equilibrium; $p_0$ represents a saturated nitrogen vapor pressure; L represents the Avogadro number; and σ represents an adsorption cross section of nitrogen.

To calculate a pore volume $V_p$ using the nitrogen BET method, for example, adsorption data of an absorption isotherm obtained as thus described are linearly interpolated, and a volume adsorbed V at a relative pressure set for calculating the pore volume is obtained. The pore volume $V_p$ can be calculated from the volume adsorbed V according to Expression (4) (see pages 62 to 65 of Instruction Manual for BELSORP-mini and BELSORP analysis programs manufactured by BEL JAPAN, INC.). A pore volume obtained based on the nitrogen BET method may be simply referred to as "pore volume".

$$V_p = (V/22414) \times (M_g/\rho_g) \qquad (4)$$

In the expressions, V represents the volume of nitrogen adsorbed at a relative pressure; $M_g$ represents the molecular weight of nitrogen; and $\rho_g$ represents the density of nitrogen.

For example, the diameter of a mesopore can be calculated as a distribution of pores from the rate of change of the pore volume relative to the pore diameter according to the BJH method. The BJH method is widely used as a pore distribution analyzing method. When pore distribution analysis is carried out using the BJH method, a porous carbon material is first caused to adsorb and desorb nitrogen as admolecules to obtain a desorption isotherm. When the admolecules (e.g., nitrogen) filling the pore are gradually desorbed from the pore, the thickness of the adsorption layer and the inner diameter of the hole formed as a result of the desorption is calculated based on the desorption isotherm (the inner diameter is twice the core radius of the pore). The pore radius $(r_p)$ is calculated according to Expression (5), and the pore volume is calculated according to Expression (6). The rate of change of the pore volume $(dV_p/dr_p)$ with respect to the pore diameter $(2r_p)$ is calculated from the pore radius and the pore volume and plotted, whereby a pore distribution curve is obtained (see pages 85 to 88 of Instruction Manual for BELSORP-mini and BELSORP analysis programs manufactured by BEL JAPAN, INC.).

$$r_p = t + r_k \qquad (5)$$

$$V_{pn} = R_n \cdot dV_n - R_n \cdot dt_n \cdot c \cdot \Sigma A_{pj} \qquad (6)$$

$$R_n = r_{pn}^2/(r_{kn}-1+dt_n)^2 \qquad\qquad (7)$$

In the expressions, rp represents a pore radius; rk represents the core radius (inner diameter/2) of an adsorption layer having a thickness t adsorbed on an inner wall of a pore having the pore radius $r_p$ at that pressure; $Vp_n$ represents the pore volume at the time of an n-th desorption of nitrogen; $dV_n$ represents the amount of the volume change at the n-th desorption; $dt_n$ represents the amount of the change in the thickness $t_n$ of the adsorption layer at the n-th desorption of nitrogen; $r_{kn}$ represents the core radius at the time of the n-th desorption; c represents a fixed value; and $r_{pn}$ represents the pore radius after the n-th desorption of the nitrogen. $\Sigma A_{pj}$ represents an integrated value of the surface area of the wall of the pore where j = 1, ... n-1.

For example, the diameter of a micro pore can be calculated as a distribution of pores from the rate of change of the pore volume relative to the pore diameter according to the MP method. When pore distribution analysis is carried out using the MP method, a porous carbon material is first caused to adsorb nitrogen as admolecules to obtain an adsorption isotherm. Then, the adsorption isotherm is converted into a plot of the pore volume versus the thickness t of the adsorption layer (t-plot). A pore distribution curve can be obtained based on the curvature of the plot (the amount of a change in the pore volume with respect to the amount of a change in the thickness t of the adsorption layer). See pages 72, 73, and 82 of Instruction Manual for BELSORP-mini and BELSORP analysis programs manufactured by BEL JAPAN, INC.

The non localized density functional theory (NLDFT) disclosed in JIS Z8831-2:2010 "Pore Size Distribution and Porosity of Powders (Solid Materials) - Part 2: Method of Measuring Mesopores and Macropores using Gas Adsorption" and JIS Z8831-3:2010 " Pore Size Distribution and Porosity of Powders (Solid Materials) - Part 3: Method of Measuring Micropores using Gas Adsorption" employs a program accompanying the automatic specific surface area/pore distribution measuring apparatus "BELSORP-MAX" manufactured by BELL JAPAN, INC. as an analyzing program. An analysis is carried out using a model having a cylindrical shape and carbon black (CB), as prerequisites for the analysis. No assumption is made on a distribution function for pore distribution parameters, and smoothing is performed ten times on distribution data thus obtained.

Let us now define a sterilizer constituted by the porous carbon material according to the present disclosure based on the non localized density functional theory. The sterilizer has a specific surface area of $10 m^2/g$ or more according to the nitrogen BET method, a pore volume of 0,2 $cm^3/g$ or more according to the BJH method and a pore diameter distribution obtained according to the non localized density functional theory which includes at least one peak within the range from 3 nm to 20 nm. The ratio of the volume of pores having a pore diameter within the range from 3 nm to 20 nm to the total pore volume of all pores is 0.2 or more.

A precursor of the porous carbon material is treated with an acid or alkali. Specific methods used for the treatment include, for example, immersing the porous carbon material precursor in a water solution of an acid or alkali and causing a reaction between the porous carbon material precursor with an acid or alkali in the vapor phase. More specifically, the treatment with an acid may be carried out using an acidic fluorine compound such as a hydrogen fluoride, hydrofluoric acid, ammonium fluoride, calcium fluoride, or sodium fluoride. When a fluorine compound is used, the amount of fluorine is preferable four times the amount of silicon in silicon components included in the porous carbon material precursor, and a water solution of the fluorine compound preferably has a concentration of 10 wt % or more. When silicon components (e.g., silicon dioxide) included in the porous carbon material precursor are removed using a hydrofluoric acid, silicon dioxide reacts with the hydrofluoric acid as indicated by Formula A or B, and silicon can be eliminated as hydrogen hexafluorosilicate ($H_2SiF_6$) or silicon tetrafluoride ($SiF_4$) to obtain a porous carbon material. The material may thereafter washed and dried.

$$SiO_2+6HF \rightarrow H_2SiF_6+2H_2O \qquad (A)$$

$$SiO_2+4HF \rightarrow SiF_4+2H_2O \qquad (B)$$

When the precursor is treated with alkali (base), the alkali may be sodium hydroxide. When a water solution of alkali is used, the pH of the water solution may be 11 or more. When silicon components (e.g., silicon dioxide) included in the porous carbon material precursor are removed using a water solution of sodium hydroxide, silicon dioxide is made to react as indicated by Formula C by heating the water solution of sodium hydroxide. Sodium silicate ($Na_2SiO_3$) resulting from the reaction is eliminated to obtain a porous carbon material. When the precursor is processed by causing sodium hydroxide in the vapor phase, sodium hydroxide in a solid state is heated to cause it to react as indicated by Formula C. Sodium silicate ($Na_2SiO_3$) resulting from the reaction is eliminated to obtain a porous carbon material. The material may thereafter be washed and dried.

$$SiO_2 + 2Na_2OH \rightarrow Na_2SiO_3 + H_2O \qquad (C)$$

The porous carbon material according to the present disclosure may be a porous carbon material including holes having three-dimensional regularity, for example, as disclosed in JP-A-2010-106007 (a porous carbon material having what is called an inverse opal structure). Specifically, the porous carbon material spherical holes in a three-dimensional arrangement having a average diameter in the range from $1 \times 10^{-9}$ m to $1 \times 10^{-5}$ m and having a surface area of $3 \times 10^2$ $m^2/g$ or more. Preferably, the holes are arranged in a disposition similar to a crystalline structure in a macroscopic view thereof. Alternatively, the holes of the porous carbon material has holes arranged on a surface thereof in a disposition similar to the alignment of a (111) plane of a face-centered cubic structure in a macroscopic point of view.

[Embodiment 1]

Embodiment 1 of the present disclosure are directed to a nicotine adsorbent, a quinoline adsorbent, a benzopyrene adsorbent, a toluidine adsorbent, or a carcinogen adsorbent. Specifically, an adsorbent of the embodiment 1 includes a porous carbon material made from a plant-based material including silicon. More specifically, the adsorbent includes a porous carbon material having a silicon content of 1 wt% or less made from a plant-based material having a silicon content of 5 wt % or more. The adsorbent has a specific surface area of 10 $m^2/g$ or more according to the nitrogen BET method and a pore volume of 0.2 $cm^3/g$ or more according to BJH method and a pore diameter distribution obtained according to the non localized density functional theory which includes at least one peak within the range from 3 nm to 20 nm. The ratio of the volume of pores having a pore diameter within the range from 3 nm to 20 nm to the total pore volume of all pores is 0.2 or more.

The plant-based material from which the porous carbon material of the embodiment 1 is made is rice chaff. The porous carbon material of the embodiment 1 is obtained by carbonizing chuff to convert it into a carbonic substance (porous carbon material precursor) and thereafter treating the substance with an acid. A method of manufacturing the adsorbent of the embodiment 1 will be described below.

In the process of manufacturing the adsorbent of the embodiment 1, a plant-based material was carbonized at a temperature in the range from 400°C to 1400°C, and the material was thereafter treated with an acid or alkali to obtain a porous carbon material. First, a heating process (a preliminary carbonizing process) was performed on pulverized chaff (chaff of rice "Isehikari" produced in Kagoshima prefecture having a silicon (Si) content of 10 wt %) in an inert gas. Specifically, the chaff was carbonized by heating it at 500°C for 5 hours in a flow of nitrogen gas to obtain a carbide. Such a process makes it possible to reduce or eliminate tar components which will otherwise be generated at a subsequent carbonizing step. Thereafter, 10 g of the carbide was put in a crucible made of alumina, and the temperature of the carbide was raised to 800°C at a rate of 5°C/min. in a flow of nitrogen gas (10 liters/min.). The carbide was carbonized at 800°C for one hour to convert it into a carbonic substance (porous carbon material precursor), and the substance was cooled down to room temperature. The nitrogen gas was kept flowing during the carbonization and cooling. Next, the porous carbon material precursor was acid-treated by immersing it in a water solution of hydrofluoric acid of 46 vol % one night, and the precursor was washed using water and ethyl alcohol until it had a pH of 7. Next, the precursor was dried at 120°C and was activated by heating it at 900°C for 3 hours in a flow of water vapor. The porous carbon material of the present embodiment 1 was obtained as thus described.

Nutshell activated carbon used cigarette filters available on the market was used as comparative example 1.

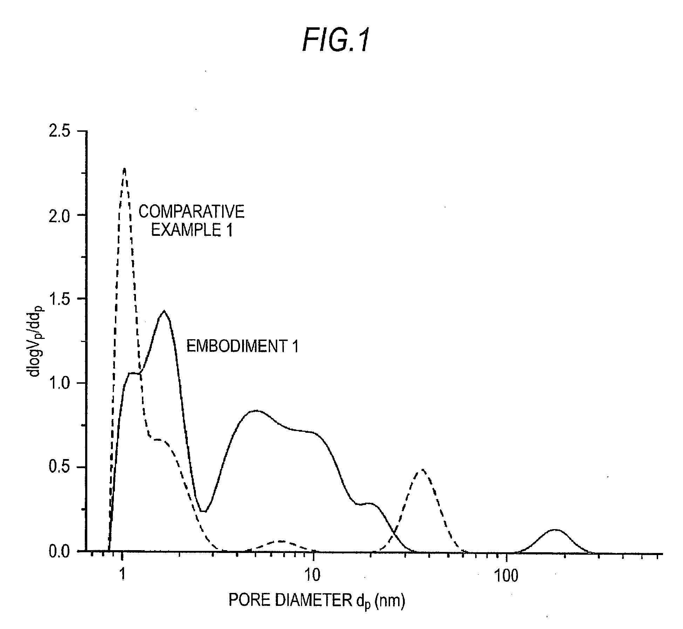

The specific surface areas and pore volumes of the porous carbon materials of the embodiment 1 and the comparative example 1 were measured, and results as shown in Table 1 were obtained. In Table 1, the term "specific surface area" means a specific surface area in $m^2/g$ obtained according to the nitrogen BET method. The unit of the pore volumes which were obtained according to the BJH method and the MP method is $cm^3/g$. Fig. 1 shows results of measurement of pore diameter distributions obtained according to the non localized density functional theory. The ratios of total volumes of pores having a diameter within the range from 3 nm to 20 nm to the total volumes of all pores were as shown below.

Embodiment 1: 0.407 (total volume of all pores: 2.16 $cm^3/g$)

Comparative Example 1: 0.134 (total volume of all pores: 0.756 $cm^3/g$)

Table 1

|  | Specific surface areas | Pore volumes according to the BJH method | Pore volumes according to the MP method |
|---|---|---|---|
| Embodiment 1 | 1370 | 0.60 | 0.56 |
| Comparative Example 1 | 1099 | 0.10 | 0.48 |

A nitrogen adsorption/desorption test was carried out to find the specific surface areas and the pore volumes using a measuring apparatus BELSORP-mini (manufactured by BELL JAPAN, INC.). The measurement was carried out at a measurement relative pressure in equilibrium ($p/p_0$) of 0.01 to 0.99. The specific surface areas and the pore volumes were calculated using a BELSORP analysis program. Pore diameter distributions of mesopores and micropores were obtained by conducting a nitrogen adsorption/desorption test using the above-mentioned measuring apparatus and carrying out calculations using the BELSORP analysis program based on the BJH method and the MP method. Further, the measurement based on the non localized density functional theory (NLDFT) was carried out using an automatic specific surface area/pore distribution measuring apparatus "BELSORP-MAX" manufactured by BELL JAPAN, INC. Prior to the measurement, the samples were subjected to drying at 200°C for 3 hours as a pre-process.

It was revealed that the porous carbon material of the embodiment 1 included a greater number of mesopores of about 3 to 20 nm compared to the activated carbon of the comparative example 1.

Measurement was carried out to find the volumes of tar components or carcinogens such as nicotine, quinoline, bezopyrene, and toluidine adsorbed per unit weight of the porous carbon material. The volumes adsorbed were measured by first preparing water solutions using the four types of substances having different number average molecular weights, i.e., nicotine (number average molecular weight: 162), quinoline (number average molecular weight: 129), benzopyrene (umber average molecular weight: 252, and toluidine (number average molecular weight: 107) and a phosphoric acid buffer having a pH of 7.3. A predetermined amount of the porous carbon material was added to each of water solutions of 40.0 milliliters each thus prepared, and the water solutions were shaken at 37±2°C for one hour. After shaking the solutions, the porous carbon material was removed from the solutions using a membrane filter made of polytetrafluoroethylene having pores of 500 $\mu$m. The absorbance of the filtered solutions was measured by performing UV/visible light absorbance measurement to identify the molar concentrations of the water solutions. The molar concentrations were compared with initial molar concentrations of the water solutions measured before adsorption to calculate the volumes adsorbed. The volumes adsorbed per one gram of the porous carbon material were calculated using the expression shown below.

```
(the volume adsorbed per one gram of the porous carbon material) = (the
molecular weight of the solute) × {the molar concentration of the water
solution before adsorption) - (the molar concentration of the water
solution after adsorption)} / (the amount of the porous carbon material
per 1000 milliliter)
```

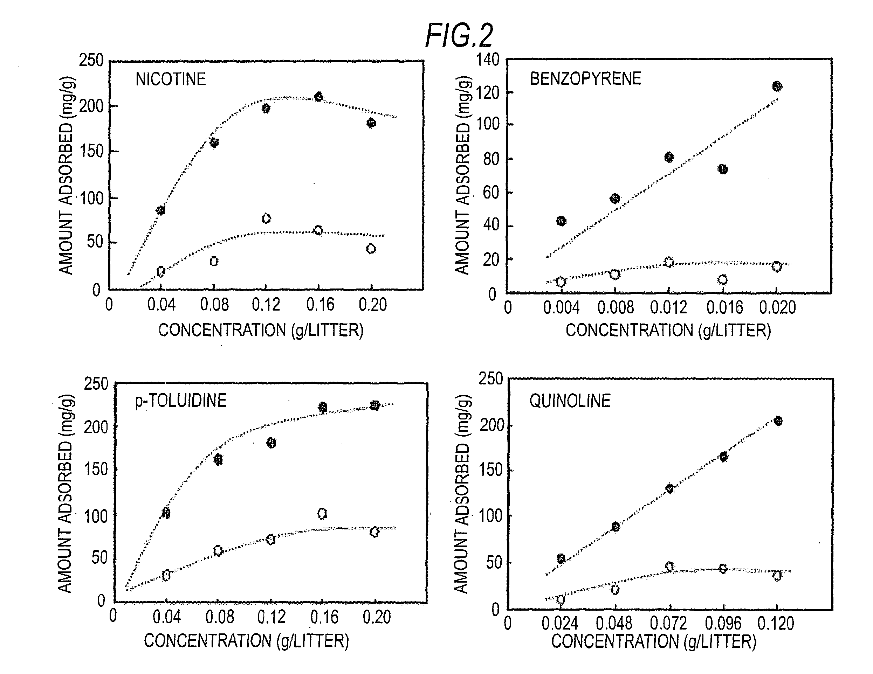

The volumes (in milligrams) of nicotine, quinoline, benzopyrene, and toluidine adsorbed per one gram of the porous carbon material and the activated carbon are shown in Fig. 2. The adsorbent according to the embodiment 1 (indicated by dots in Fig. 2) adsorbed very much greater amounts of the carcinogens such as nicotine, quinoline, benzopyrene, and toluidine compared to the adsorbent of the comparative example 1 (indicated by circles in Fig. 2).

Samples were prepared by adding 50 milligrams of the porous carbon material of the embodiment 1 and 50 milligrams of the activated carbon of the comparative example 1 to 5 milliliters of ethanol solutions including 0.01 wt % nicotine, toluidine, and benzopyrene mixed and dissolved therein. The samples were filtered when 30 seconds passed after the addition of the adsorbents, and components in the solutions were measured using the GC-MS (gas chromatography-mass spectroscopy) to compare the volumes absorbed by the adsorbents. The volumes of nicotine adsorbed and adsorption selectivity of the other materials was identified from the equation shown below. In Table 2, the term "volume adsorbed" represents values calculated from peak areas according to the GC-MS method, and the volumes may be calculated in any unit. The values shown in brackets in Table 2 are selective adsorption rates, and the values preceding the brackets represent the peak surface areas according to the GC-MS method.

$$(\text{selective adsorption rate}) = (\text{volume of carcinogen adsorbed}) \times (\text{volume of nicotine adsorbed})$$

Table 2

|  | Embodiment 1 | Comparative Example 1 |
|---|---|---|
| Nicotine | 73 | 54 |
| Toluidine | 20 (0.27) | 11 (0.20) |
| Benzopyrene | 153(2.1) | 65 (1.2) |

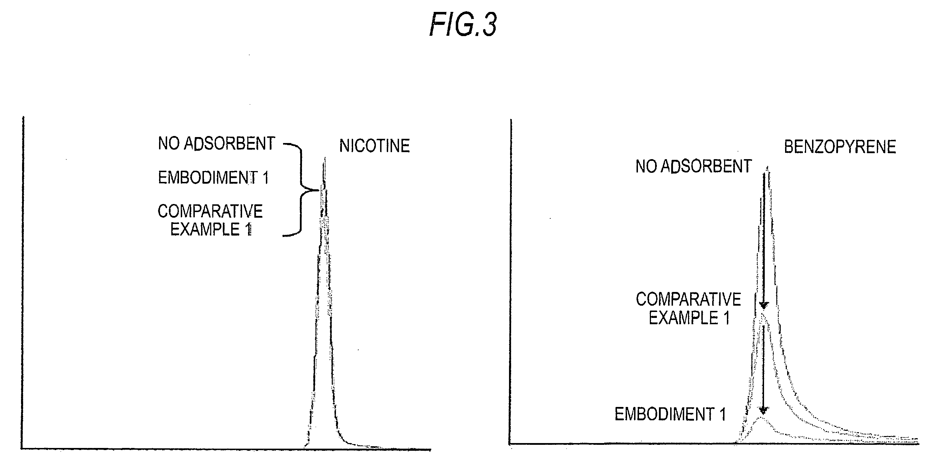

Table 2 indicates that the adsorbent of the embodiment 1 adsorbs carcinogens with higher selectivity compared to the adsorbent of the comparative example 1. Fig. 3 is graphs showing results of CG-MS measurement carried out on nicotine and benzopyrene. The addition of the adsorbents of the embodiment 1 and the comparative example 1 resulted in substantially no change in the peak of the amount of nicotine identified using the GC-MS method. On the contrary, the peak of the amount of benzopyrene identified using the GC-MS method decreased after the adsorbents of the embodiment 1 and the comparative example 1 were added, and the adsorbent of the embodiment achieved a greater reduction in the amount of bensopyrene.

The present disclosure has been described based on the embodiment thereof, and the present disclosure is not limited to the embodiment and may be modified in various ways. While the embodiment has been described as an example in which a porous carbon material is made from rice chaff, other plants may be used. For example, other usable plants include straws, reeds, stems of Wakame seaweed, terrestrial vascular plants, ferns, bryophytes, algae, and marine algae. Those plants may be used alone, and plural types of such plants may alternatively be used in combination. Specifically, a porous carbon material may be made from chaff of rice (e. g. , Isehikari produced in Kagoshima prefecture) that is a plant-based material. The chaff may be carbonized into a carbonic substance (a porous carbon material precursor), and the carbonic substance may be treated with an acid to obtain a porous carbon material. Alternatively, a porous carbon material may be made from reeds which are a gramineous material. The gramineous reeds may be carbonized into a carbonic substance (a porous carbon material precursor), and the carbonic substance may be treated with an acid to obtain a porous carbon material. Advantages similar to those described above were achieved by a porous carbon material obtained by treating a material using alkali 8base) such as a water solution of sodium hydroxide instead of a water solution of hydrofluoric acid.

Alternatively, a porous carbon material may be made from stems of Wakame seaweed (cropped in Sanriku, Iwate prefecture) which is a plant-based material. The stems of Wakame seaweed may be carbonized into a carbonic substance porous carbon material precursor), and the carbonic substance may be treated with an acid to obtain a porous carbon material. Specifically, the stems of Wakame seaweed are heated at a temperature of, for example, 500°C and carbonized. The stems of Wakame seaweed may be treated with alcohol before heating them. Specifically, the material may be immersed in ethyl alcohol or the like. As a result, moisture included in the material is reduced, and the process also allows elution of elements other than carbon and mineral components which will otherwise be included in the porous carbon material finally obtained. The treatment with alcohol suppresses the generation of gasses during the carbonizing process. More specifically, stems of Wakame seaweed are immersed in ethyl alcohol for 48 hours. It is preferable to perform an ultrasonic process on the material in ethyl alcohol. The stems of Wakame seaweed are then carbonized by heating them at 500°C for 5 hours in a flow of nitrogen gas to obtain a carbide. Such a process (preliminary carbonizing process) can reduce or eliminate tar components which will otherwise be generated at the subsequent carbonizing step. Thereafter, 10 grams of the carbide is put in a crucible made of alumina, and the temperature of the carbide is raised to 1000°C at a rate of 5°C/min. in a flow of nitrogen gas (10 liters/min.). The carbide is carbonized at 1000°C for 5 hours to convert it into a carbonic substance (porous carbon material precursor), and the substance is cooled down to room temperature. The nitrogen gas is kept flowing during the carbonization and cooling. Next, the porous carbon material precursor is acid-treated by immersing it in a water solution of hydrofluoric acid of 46 vol % one night, and the precursor is washed using water and ethyl alcohol until it has a pH of 7. Finally, the precursor is dried to obtain a porous carbon material.

The present disclosure contains subject matter related to that disclosed in Japanese Priority Patent Application JP 2010-170713 and JP 2011-012875 filed in the Japan Patent Office on July 29, 2010 and January 25, 2011, respectively.

**Claims**

1. A cigarette filter comprising a carcinogen adsorbent comprising a porous carbon material having a specific surface area of 10 m$^2$/g or more according to the nitrogen BET method and a pore volume of 0.2 cm$^3$/g or more according to the BJH method and a pore diameter distribution obtained according to the non localized density functional theory which includes at least one peak within the range from 3 nm to 20 nm and wherein the ratio of the volume of pores having a pore diameter within the range from 3 nm to 20 nm to the total pore volume of all pores is 0.2 or more.

2. Use of a cigarette filter according to claim 1, to adsorb nicotine.

3. Use of a cigarette filter according to claim 1, to adsorb quinoline.

4. Use of a cigarette filter according to claim 1, to adsorb benzopyrene.

5. Use of a cigarette filter according to claim 1, to adsorb toluidine.

6. Use of a cigarette filter according to claim 1, to adsorb a carcinogen.

**Patentansprüche**

1. Zigarettenfilter, umfassend ein Karzinogen-Adsorptionsmittel, umfassend ein poröses Kohlenstoffmaterial mit einer spezifischen Oberfläche von 10 m$^2$/g oder mehr gemäß der Stickstoff-BET-Methode und einem Porenvolumen von 0,2 cm$^3$/g oder mehr gemäß der BJH-Methode und einer gemäß der nichtlokalisierten Dichtefunktionaltheorie erhaltenen Porendurchmesserverteilung mit mindestens einem Peak im Bereich von 3 nm bis 20 nm, wobei das Verhältnis des Volumens von Poren mit einem Porendurchmesser im Bereich von 3 nm bis 20 nm zum Gesamtporenvolumen aller Poren 0,2 oder mehr beträgt.

2. Verwendung eines Zigarettenfilters nach Anspruch 1 zur Adsorption von Nicotin.

3. Verwendung eines Zigarettenfilters nach Anspruch 1 zur Adsorption von Chinolin.

4. Verwendung eines Zigarettenfilters nach Anspruch 1 zur Adsorption von Benzopyren.

5. Verwendung eines Zigarettenfilters nach Anspruch 1 zur Adsorption von Toluidin.

6. Verwendung eines Zigarettenfilters nach Anspruch 1 zur Adsorption eines Karzinogens.

**Revendications**

1. Filtre de cigarette comprenant un adsorbant de cancérogène comprenant un matériau carboné poreux ayant une surface spécifique d'au moins 10 m$^2$/g selon la méthode BET à l'azote, un volume de pores d'au moins 0,2 cm$^3$/g selon la méthode BJH et une distribution de diamètre de pores obtenue selon la théorie de la fonctionnelle de la densité non localisée qui comporte au moins un pic dans la gamme de 3 nm à 20 nm, et dans lequel le rapport entre le volume des pores ayant un diamètre de pores dans la gamme de 3 nm à 20 nm et le volume total de pores de tous les pores est d'au moins 0,2.

2. Utilisation d'un filtre de cigarette selon la revendication 1 pour adsorber la nicotine.

3. Utilisation d'un filtre de cigarette selon la revendication 1 pour adsorber la quinoléine.

4. Utilisation d'un filtre de cigarette selon la revendication 1 pour adsorber le benzopyrène.

5. Utilisation d'un filtre de cigarette selon la revendication 1 pour adsorber la toluidine.

6. Utilisation d'un filtre de cigarette selon la revendication 1 pour adsorber un cancérogène.

## FIG.1

FIG.2

EP 2 412 432 B1

## FIG.3

NO ADSORBENT

EMBODIMENT 1

COMPARATIVE
EXAMPLE 1

NICOTINE

NO ADSORBENT

BENZOPYRENE

COMPARATIVE
EXAMPLE 1

EMBODIMENT 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61054236 A
- WO 2007117115 A
- CA 2330782
- US 4195649 A
- WO 03059096 A
- WO 2010035823 A
- JP 2010106007 A
- JP 2010170713 A
- JP 2011012875 A

### Non-patent literature cited in the description

- *Med. Chem. Commun.,* 2010, vol. 1, 136-138
- Instruction Manual for BELSORP-mini and BEL-SORP analysis programs. BEL JAPAN, INC, 62-66
- Instruction Manual for BELSORP-mini and BEL-SORP analysis programs. BEL JAPAN, INC, 85-88
- BELSORP-MAX. BELL JAPAN, INC